# EUROPEAN PATENT APPLICATION

(11) **EP 4 109 362 A1**
(43) Date of publication of application: **28.12.2022**
(21) Application number: 21757397.1
(22) Date of filing: 08.02.2021
(51) Int. Cl.: G06Q 10/06

(54) **WORK RATE MEASUREMENT DEVICE AND WORK RATE MEASUREMENT METHOD**

(30) Priority: 18.02.2020 JP 2020025497
(71) Applicant: NEC Platforms, Ltd., Kanagawa 213-8511 (JP)
(72) Inventor: MATSUBAYASHI Yutaka, Kawasaki-shi, Kanagawa 213-8511 (JP)
(74) Representative: Betten & Resch
(86) International application number: PCT/JP2021/004573
(87) International publication number: WO 2021/166716

(57) **Abstract**

A work rate measurement device for measuring a work rate when manual work is performed within a prescribed work frame provided for each of a plurality of steps includes: a model generation means for capturing an image within the work frame using cameras installed for the plurality of steps, causing machine learning to be performed on a hand of a worker held within the work frame based on the captured data, and generating a machine learning model for each of the cameras; a data analysis saving means for analyzing whether or not a position of a hand of a worker is included within the work frame with respect to an image of actual work being performed using the machine learning model generated by the model generation means and saving, in chronological order, analysis data obtained by the analysis; and a work rate computation means for determining a work rate within each work frame using the analysis data saved by the data analysis saving means.

## Description

### TECHNICAL FIELD

The present invention relates to a work rate measurement device and a work rate measurement method for measuring work rates when performing manual work within work frames on a production line in a factory or the like.

### BACKGROUND ART

In the manufacturing industry, such as in factories, progress is beginning to be made in the utilization of the IoT (Internet of Things), and situations in which moving images are captured with cameras or the like and analyzed for utilization in object traceability management and the like have increased.

Furthermore, in factories and the like, the utilization of factory-oriented VMS (Video Management Systems) has increased in recent years for the purpose of analysis making use of such images. There is a trend towards installing cameras in factories and analyzing image data, using artificial intelligence (AI), machine learning and the like in various ways, resulting in smart factories overall.

However, the line managers in current factories merely carry out hearings for checking on the work by workers. It is difficult to recognize situations in which workers are not actually working, for example, situations in which they are simply standing at work areas without moving their hands or the like.

In hearings for checking work in such cases, it was necessary to measure work time with a stopwatch while visually checking the actual work for multiple steps.

Furthermore, Patent Documents 1 to 3 indicated below have been proposed for reducing such problems. The technology indicated in Patent Document 1 involves using an activity identification unit that determines measurement values from when activity starts until the activity ends, and using the determined measurement values and identified activities to construct models defining the relationships between the specifics of the activity and time.

This activity identification unit identifies the positions of a worker's hands based on measurement values from a position information acquisition unit that acquires depth-including image data from a depth sensor as first position information, and that acquires image data from a digital camera as second position information.

Furthermore, this activity identification unit identifies specifics regarding the activities performed by the worker based on the identified positions of the worker's hands, and uses the identified activity specifics and the acquired measurement values to construct or update models.

The technology described in Patent Document 2 uses a range sensor including a camera or the like that can generate color or monochrome images, and a processor that detects a worker's hands from each of multiple chronological range images captured while the worker performs a work sequence on a work table.

A hand region detection unit in the processor can detect hand regions by using an identifier that has been pre-learned to detect hands in an image, and can determine whether or not hand regions are included in a region of interest by inputting HOG (Histograms of Oriented Gradients) extracted from the region of interest to the identifier.

In the technology indicated in Patent Document 3, a work time measurement unit and a stay time measurement unit are provided in an analysis unit in a control unit for controlling a server.

The work time measurement unit measures the time during which a worker is actually working at a station, and the stay time measurement unit measures the time during which the worker is at the station. Thereafter, moving images for analysis are displayed on an analysis results display screen, and the analysis information, i.e., the work time and the stay time based on the measurement results, are displayed in overlay over these moving images.

### Prior Art Documents

### Patent Documents

Patent Document 1: PCT International Publication No. WO 2017/222070
Patent Document 2: Japanese Unexamined Patent Application, First Publication No. 2019-120577
Patent Document 3: Japanese Unexamined Patent Application, First Publication No. 2019-200560

### SUMMARY OF THE INVENTION

### Problem to be solved by the Invention

The abovementioned Patent Documents 1 to 3 describe technologies for creating models by defining relationships between activity specifics and time, and technologies for measuring the amount of work performed by a worker and displaying the measured data.

However, these Patent Documents 1 to 3 only describe these technologies separately, and do not describe specific measures for associating these technologies.

The present invention has been made in view of the above-described circumstances. An example object of the present invention is to provide a work rate measurement device and a work rate measurement method that can efficiently analyze and quantify the status of work performed on a work table by means of a new, unprecedented technique.

### Means for Solving the Problem

A first example aspect of the present invention is a work rate measurement device for measuring a work rate when manual work is performed within a prescribed work frame provided for each of a plurality of steps, the work rate measurement device including: a model generation means for capturing an image within the work frame using cameras installed for the plurality of steps, causing machine learning to be performed on a hand of a worker held within the work frame based on the captured data, and generating a machine learning model for each of the cameras; a data analysis saving means for analyzing whether or not a position of a hand of a worker is included within the work frame with respect to an image of actual work being performed using the machine learning model generated by the model generation means and saving, in chronological order, analysis data obtained by the analysis; and a work rate computation means for determining a work rate within each work frame using the analysis data saved by the data analysis saving means.

A second example aspect of the present invention is a work rate measurement method for measuring a work rate when manual work is performed within a prescribed work frame provided for each of a plurality of steps, the work rate measurement method including: a model generation step of capturing an image within the work frame using cameras installed for the plurality of steps, causing machine learning to be performed on a hand of a worker held within the work frame based on the captured data, and generating a machine learning model for each of the cameras; a data analysis saving step of analyzing whether or not a position of a hand of a worker is included within the work frame with respect to an image of actual work being performed using the machine learning model generated by the model generation step and saving, in chronological order, analysis data obtained by the analysis; and a work rate computation step of determining a work rate within each work frame using the analysis data saved by the data analysis saving step.

### Effects of Invention

In an example embodiment of the present invention, a machine learning model is set for each of the cameras of work frames for multiple steps, and pre-learning is also included, thereby allowing hands to be accurately detected in various environments and allowing the work rates in the multiple steps to be efficiently recognized.

### BRIEF DESCRIPTION OF THE DRAWINGS

FIG. 1 is a diagram illustrating the structure of a work rate measurement device according to an example embodiment of the present invention.
FIG. 2 is a schematic structural diagram of the work rate measurement device according to the example embodiment of the present invention.
FIG. 3 is an explanatory diagram indicating a procedure for performing machine learning within an image area.
FIG. 4 is an explanatory diagram indicating a procedure for deciding the sizes of work frames in an image area.
FIG. 5 is a conceptual diagram for detecting actual hands during a work step.
FIG. 6 is a diagram indicating a display example for displaying work rates on a client terminal (PC).
FIG. 7 is a flow chart indicating the specific operations of the work rate measurement device.

### Example Embodiment

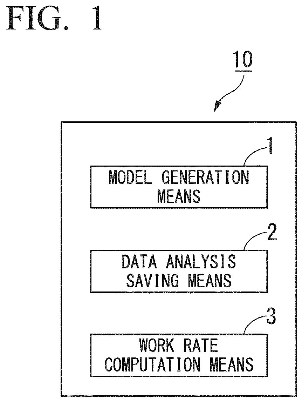

The structure of the work rate measurement device 10 according to an example embodiment of the present invention will be explained with reference to FIG. 1. This work rate measurement device 10 has a model generation means (model generation unit) 1, a data analysis saving means (data analysis storage unit) 2 and a work rate computation means (work rate computation unit) 3. These means 1 to 3 measure work rates when performing manual work within prescribed work frames provided respectively for the steps on a production line.

The means 1 to 3 constituting the work rate measurement device 10 will be explained.

The model generation means 1 uses cameras installed for the multiple steps to capture images within the work frames and performs machine learning of the positions of a workers' hands held within the work frames based on the captured data, thereby generating machine learning models for each of the cameras.

The data analysis saving means 2 uses the machine learning models generated by the model generation means 1 on images of actual work being performed, analyzes whether or not the positions of a worker's hands are included within the work frames, and saves the analysis data in chronological order.

The work rate computation means 3 uses the analysis data saved by the data analysis saving means 2 to determine the work rates within the work frames.

Furthermore, according to the work rate measurement device 10 configured as indicated above, cameras installed for the multiple steps are used to capture images within the work frames and machine learning of the positions of a workers' hands held within the work frames is performed based on the captured data, thereby generating machine learning models for each of the cameras. Thereafter, the machine learning models generated by the model generation means 1 are used on images of actual work being performed to analyze whether or not the positions of a worker's hands are included within the work frames, and the analysis data are saved in chronological order, after which the saved analysis data can be used to determine the work rates within the respective work frames.

Due to these features, the work rate measurement device 10 can determine the work rates for multiple steps with only a worker's hands as detection targets, thus reducing the control operations overall and allowing work rate detection in real time.

Additionally, the work rate measurement device 10 sets machine learning models for each of the cameras for the work frames for the multiple steps and includes pre-learning, thereby allowing the hands to be accurately detected in various environments, and allowing the work rates in the multiple steps to be efficiently recognized.

### (Example Embodiment)

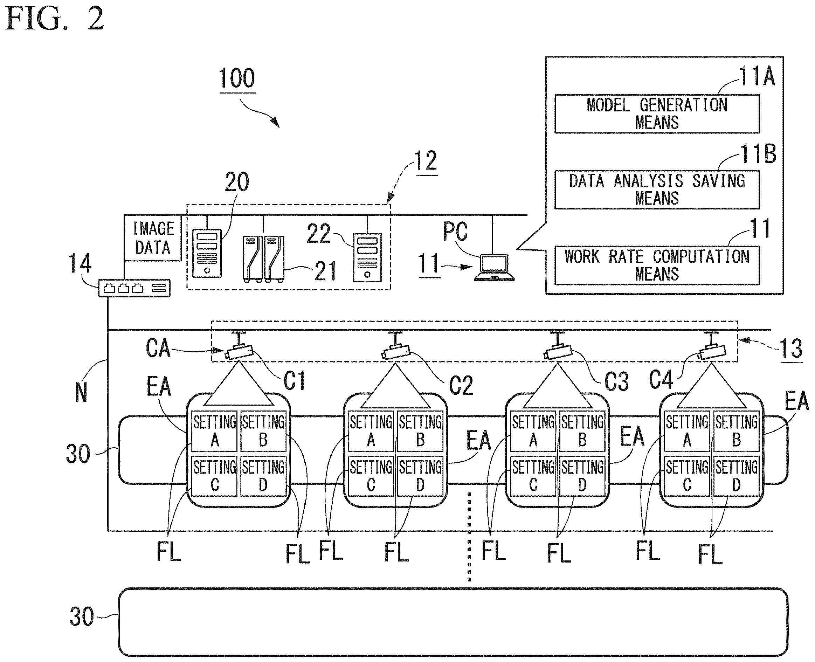

An example embodiment of the present invention will be explained with reference to FIG. 2 to FIG. 7.

FIG. 2 is an overall structural diagram of the work rate measurement device 100 according to the example embodiment. The work rate measurement device 100 has an activity control unit 11, a data processing unit 12 and an image capture unit 13 that are directly connected to a network N.

The image capture areas captured by the image capture unit 13 are indicated by the reference symbol EA. Additionally, the network N on the side having the image capture unit 13 is connected to the network N on the side having the activity control unit 11 and the data processing unit 12 by means of a hub 14.

Additionally, these constituent elements are installed in a factory.

The activity control unit 11 is a client terminal (PC) that controls the activity of the entire network N in the work rate measurement device 100, and has a model generation means 11A, a data analysis saving means 11B and a work rate computation means 11C. The respective constituent elements of the model generation means 11A, the data analysis saving means 11B and the work rate computation means 11C may, for example, be realized by a hardware processor such as a CPU (Central Processing Unit) in the client terminal (PC) executing a program (software). The program may be stored in a storage medium.

The model generation means 11A captures images within the image capture areas EA with cameras (indicated by the reference symbol CA) (explained below) that are installed for the multiple steps, and performs machine learning of the positions of a worker's hands held within work frames (indicated by the reference symbol FL) (explained below) based on the image capture data, and generates machine learning models for each of the cameras CA.

The data analysis saving means 11B uses the machine learning models generated by the model generation means 11A on images of actual work being performed to analyze whether or not the positions of a worker's hands are included within the work frames FL, and saves the analysis data in chronological order.

The work rate computation means 11C uses the analysis data saved by the data analysis saving means 11B to determine the work rates within the respective work frames FL.

The specific processes performed by the model generation means 11A, the data analysis saving means 11B and the work rate computation means 11C will be explained below.

Additionally, the client terminal (PC) constituting the activity control unit 11, as illustrated in FIG. 2, has a screen that can be displayed on a GUI (Graphical User Interface) and is connected, via the network, to a server 22 (explained below) for machine learning of the movements of a worker's hands in the factory, and the cameras CA for capturing images that serves as the inputs for the machine learning.

The data processing unit 12 includes a factory-oriented VMS (Video Management System) server 20, a recorded-image storage 21 that stores image capture data from the cameras CA supplied through the VMS server 20, and an image analysis/WEB (World Wide Web) server 22 that designates and saves, as running logs (log data), the folders of image capture data saved in the recorded-image storage 21. The image capture data of the cameras and the running logs (log data) saved in the data processing unit 12 are defined as analysis data.

The image capture unit 13 includes multiple cameras CA (cameras C1, C2, C3, C4, ...) for capturing images of a production line 30. The image capture unit 13 captures images of each of the work tables of the respective workers by means of these cameras CA.

In FIG. 2, multiple work frames FL, as illustrated in FIG. 2, are set for the image capture areas EA on the work tables captured respectively by the cameras CA (cameras C1, C2, C3, C4).

Additionally, FIG. 2 shows, as one example, an example (setting A to setting D) for the case in which four work frames FL are set within the image capture area EA on each work table.

Additionally, although FIG. 2 shows a single production line 30, similar image capture areas EA may be provided on multiple production lines 30.

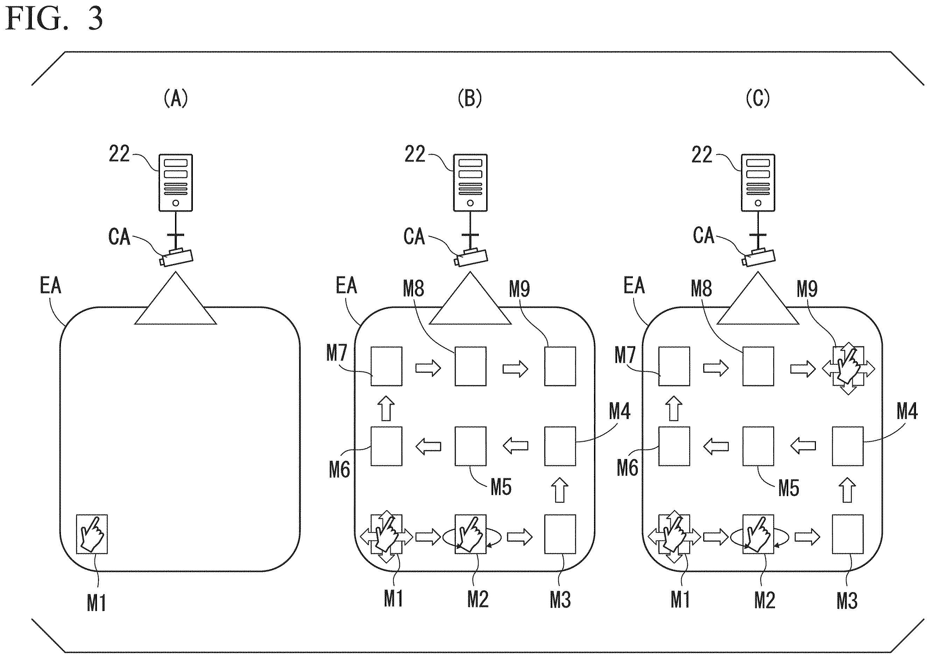

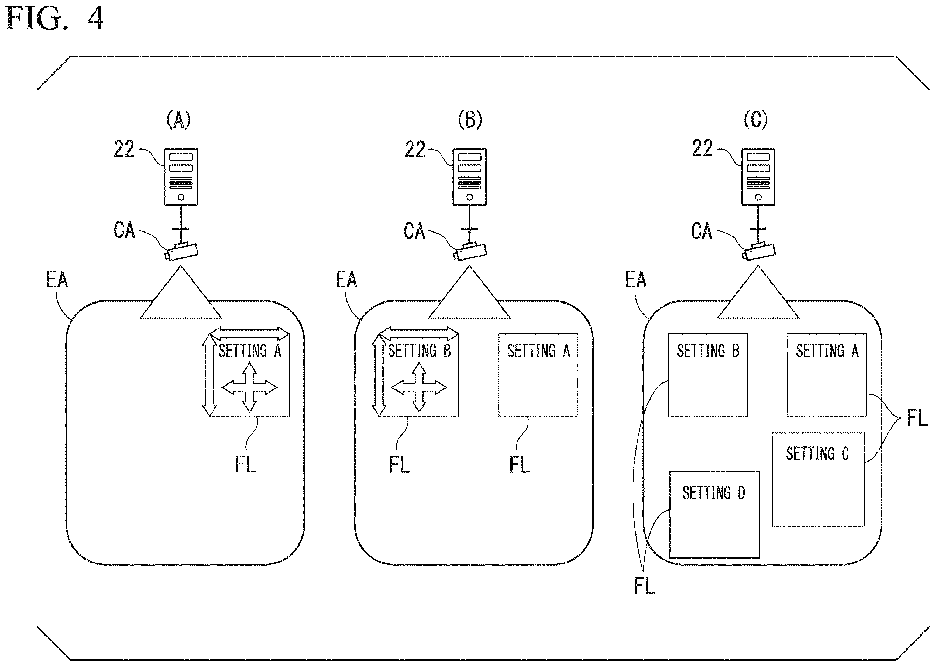

Furthermore, the model generation means 11A in the work rate measurement device 100 as mentioned above, before actually detecting workers' hands, generates optimal machine learning models in accordance with the environments thereof (explained below by means of FIG. 3 and FIG. 4) by having the workers move their hands in front of the cameras CA in accordance with instructions from the client terminal (PC) for each of the cameras CA (cameras C1, C2, C3, C4, ...) in the factory.

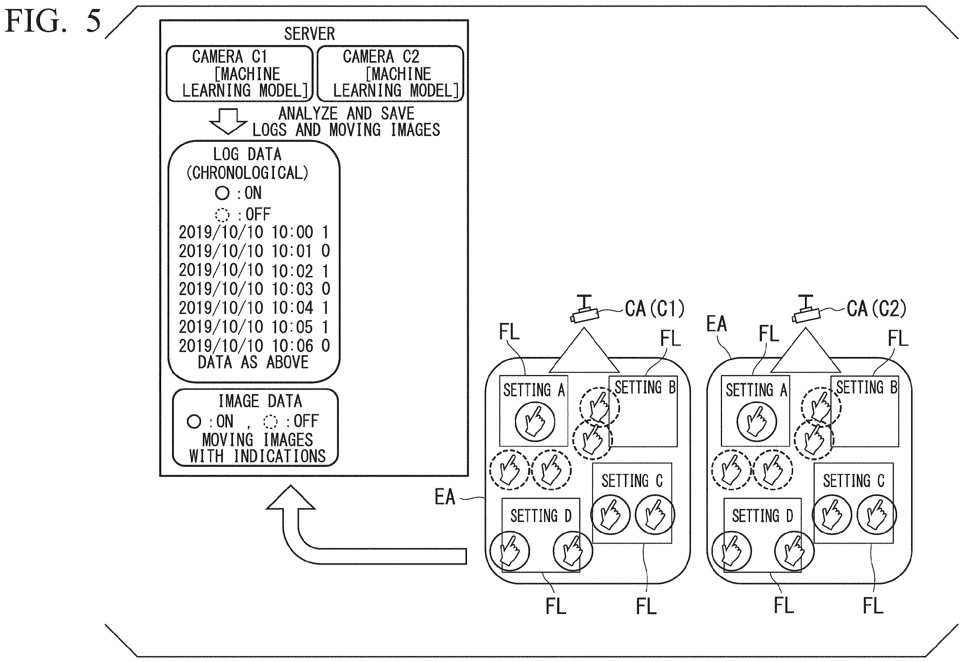

Thereafter, the data analysis saving means 11B in the work rate measurement device 100 uses the machine learning models that have been optimized for each of the cameras CA to detect the hands, analyzes whether the detected hands are included within preset areas for the cameras CA, and saves logs and moving images displaying the detected hands with frames, as clock time-separated data, in the server 22 (explained below by means of FIG. 5).

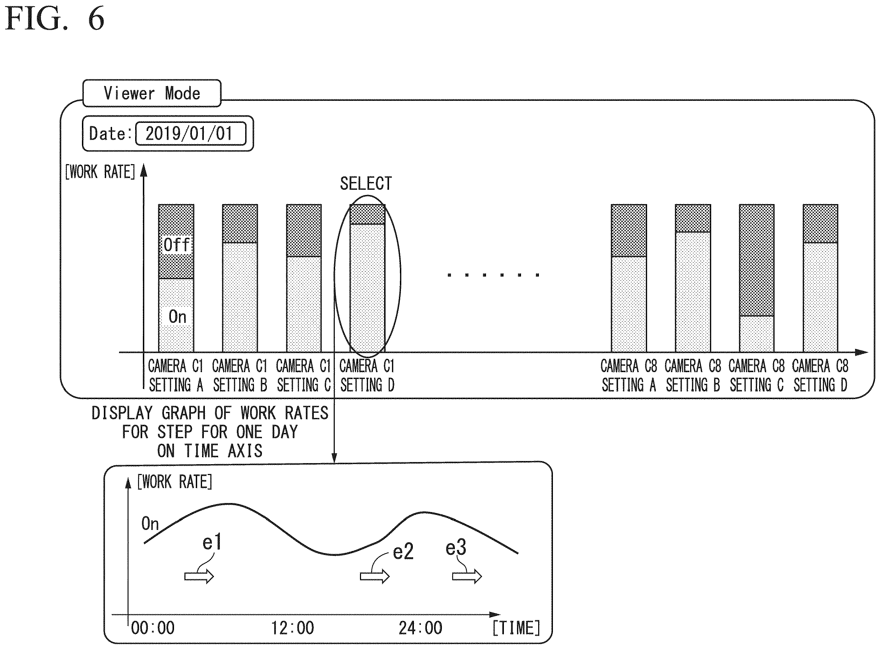

Thereafter, the work rate computation means 11C in the work rate measurement device 100 allows a line manager to check the work rate statuses for a day on the client terminal (PC) by utilizing the log data and the moving images (explained below by means of FIG. 6).

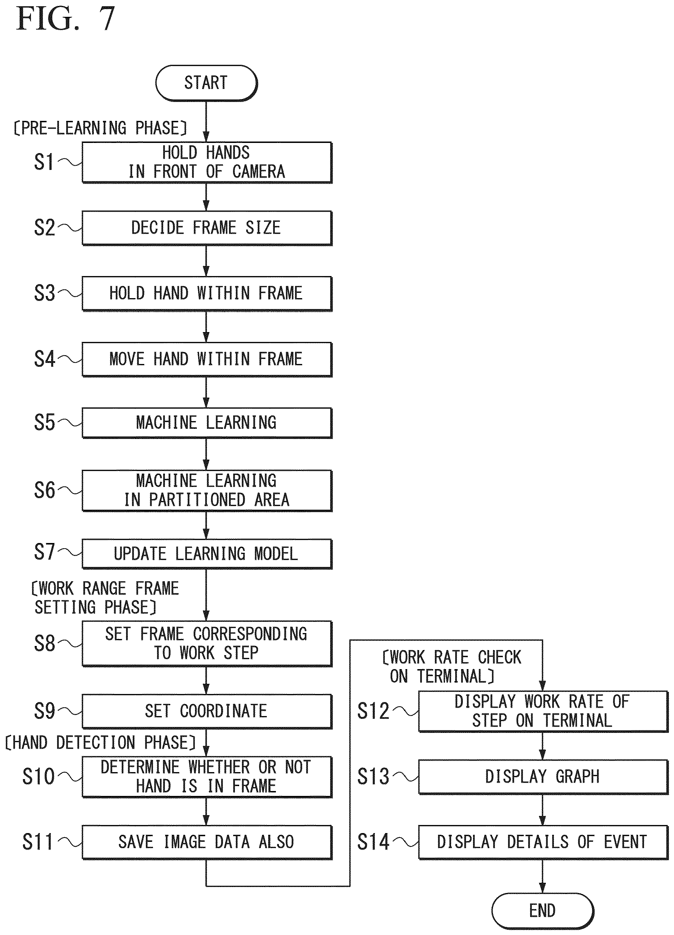

Next, the specific operations of the activity control unit 11, the data processing unit 12 and the image capture unit 13 will be sequentially explained by the step (S), referring to the flow chart in FIG. 7.

The "pre-learning phase" below is a process that is executed by the model generation means 11A in the activity control unit 11. Additionally, the " work range frame setting phase after pre-learning" and the "hand detection phase" are processes that are performed by the data analysis saving means 11B in the activity control unit 11. Additionally, the "work rate check by the client terminal (PC)" is a process performed by the work rate computation means 11C in the activity control unit 11.

### [Pre-Learning Phase]

First, the "pre-learning phase" executed by the model generation means 11A in the activity control unit 11 will be explained by referring to steps S1 to S7.

### [Step S1]

In step S1, in a state in which cameras CA have been installed for multiple steps in a factory, workers are instructed to place their hands in image capture areas EA in front of the cameras CA (see section (A) in FIG. 3). In step S1 and subsequent steps, processes are executed for each of the cameras C1, C2, C3, C4 constituting the cameras CA.

### [Step S2]

In step S2, a machine learning model for hands in general is used to recognize hands captured by the cameras CA (cameras C1, C2, C3, C4), and frames that are the sizes of the hands (frames of a size in which the hands fit) are displayed, as work frames FL, on the client terminal (PC).

At this time, in the client terminal (PC), the sizes of the work frames FL for learning the hands in the cameras CA (cameras C1, C2, C3, C4) are decided (see section (A) in FIG. 3).

### [Step S3]

In step S3, based on instructions from the client terminal (PC), the workers are asked to place their hands in the work frames FL and to hold up their hands (see section (A) in FIG. 3).

### [Step S4]

In step S4, based on instructions from the client terminal (PC), the workers are asked to perform activities such as holding the hands with the palms up or with the palms down, rotating the hands and the like within the work frames FL (see section (A) in FIG. 3).

### [Step S5]

In step S5, a labeling process for machine learning by the size of the hands is automatically implemented on the image data for the respective work frames FL, thereby performing machine learning regarding the hands in accordance with the environments (brightness/angle of view/hand type/captured background, etc.) of each of the cameras CA (cameras C1, C2, C3, C4) (see section (A) in FIG. 3).

### [Step S6]

In step S6, machine learning is performed within the image capture areas EA captured by the respective cameras C1, C2, C3, C4, by having the workers move, in accordance with instructions, so as to sequentially hold their hands in equally partitioned areas, for example, in the nine locations (indicated by reference symbols M1 to M9) indicated in section (B) of FIG. 3 (see section (B) in FIG. 3), in the above-mentioned order.

### [Step S7]

In step S7, the machine learning models are updated at the time the machine learning has been performed at the nine locations set in step S6. As a result thereof, the machine learning models for each of the cameras CA saved in the recorded-image storage 21 via the image analysis/WEB server 22 are optimized in accordance with their camera environments (see section (C) in FIG. 3).

### [Work Range Frame Setting Phase after Pre-Learning]

Next, the "work range frame setting phase after pre-learning" executed by the data analysis saving means 11B in the activity control unit 11 will be explained with reference to steps S8 and S9.

### [Step S8]

In step S8, the portions that are to be actually checked for the work steps in the respective cameras C1, C2, C3, C4 are set as rectangular work frames FL on a GUI on the client terminal (PC).

At this time, the vertical and horizontal sizes of the work frames FL and the coordinate positions thereof can be changed (see section (A) in FIG. 4).

### [Step S9]

In step S9, if there are work frames FL at four locations for each of the cameras C1, C2, C3, C4, then the sizes and the coordinate positions of the respective work frames FL at these four locations are set similarly (see section (B) and section (C) in FIG. 4).

### [Hand Detection Phase]

Next, the "hand detection phase" executed by the data analysis saving means 11B in the activity control unit 11 will be explained with reference to steps S10 and S11.

### [Step S10]

In step S10, the machine learning models that were learned for each of the cameras CA (cameras C1, C2, C3, C4) above are used to determine whether or not the hands of workers appear in the work frames FL in images of line steps in which work is actually being performed, and this information is saved as ON-OFF data (ON: 1 / OFF: 0) in chronological order on the image analysis/WEB server 22 (see section (A) and section (B) in FIG. 5).

In section (A) of FIG. 5, states in which a hand of a worker appears in a work frame FL (ON) are indicated by solid lines and states in which a hand of a worker does not appear in a work frame FL (OFF) are indicated by dashed lines.

Additionally, section (B) in FIG. 5 illustrates a diagram showing, as an image, ON-OFF data that are stored in the recorded-image storage 21 through the VMS server 20, and image data thereof.

### [Step S11]

In step S11, for image data that were analyzed at the same time, image data are also saved in which the work frames FL of the hands at the time the hands were detected have been added. These are saved in order to check, later on, the states in which the hands were detected (section (B) in FIG. 5).

### [Work Rate Check by Client Terminal (PC)]

Next, the "work rate check by the client terminal (PC)", which is executed by the work rate computation means 11C in the activity control unit 11, will be explained with reference to steps S12 to S14.

### [Step S12]

In step S12, the log data and image data that were saved above are used to display the work rates for multiple steps on the client terminal (PC) (see section (A) in FIG. 6).

Section (A) in FIG. 6 shows an example in which the work rates in each of the work frames FL of the multiple steps are displayed by using bar graphs.

### [Step S13]

In step S13, when a bar graph displayed in section (A) in FIG. 6 is selected (when an operation such as a click is performed), work rates for each time for the multiple steps are displayed in section (B) in FIG. 6.

Section (B) in FIG. 6 shows, as an example, the work rates for each time when "setting D in work area EA of camera C1" is selected.

In the display at this time, events that are set in advance so as to set off an alarm, for example, as indicated by the arrows e1 to e3 in section (B) in FIG. 6, when there is an abnormality, such as absolutely no work being performed by the worker (the hands not appearing in the work frames FL or the hands being continually detected the entire time), are also indicated (see section (B) in FIG. 6).

### [Step S14]

In step S14, when an event arrow e1 to e3 is selected (clicked), the moving image from the relevant clock time is displayed to be able to see exactly what occurred at that time.

In the work rate measurement device 100 according to the present example embodiment, as explained in detail above, the effects indicated below can be expected.

That is, in the work rate measurement device 100 of the present example embodiment, the control is reduced and real-time detection is made possible by having only the hands of workers as detection targets.

Additionally, in the work rate measurement device 100 of the present example embodiment, machine learning models are provided for each of the cameras CA (cameras C1, C2, C3, C4) and pre-learning is included. Thus, the hands can be accurately detected in various environments, and the actual work rates in multiple steps can be efficiently determined.

Additionally, in the work rate measurement device 100 of the present example embodiment, if the hand detection portions are replaced with different objects (for example, tires or the like), then by implementing the process with the hands replaced by the different objects from the pre-learning stage, the times during which the objects that are not hands appeared in the work frames FL can be recognized. Thus, there is expandability to allow manufactured article accumulation conditions on the line to be checked as well.

### (Modification Example 1)

In the example embodiment described above, the image data obtained by the cameras CA is used as an input, pre-learning is performed in dialog form on their hands in accordance with the environments of workers, and only it is determined whether or not the hands of the workers appear within the work frames FL, and thus it can also be used outside a factory.

As one example, by using the example embodiment of the present invention, data such as whether a level of school learning is proportional to the time spent in taking notes can be collected for the classroom or for cram schools, and this data can be used as a new measure of school learning. Furthermore, the example embodiment of the present invention can be applied to fields in which skilled workers, such as beauticians or cooks, actually perform manual work at locations where cameras can be installed indoors.

### (Modification Example 2)

In the above-described example embodiment, four work frames FL as indicated in FIG. 2 have been set in the image capture areas EA of the cameras CA (cameras C1, C2, C3, C4), and machine learning has been performed in nine areas, as indicated in FIG. 3.

The numbers of the work frames FL and the machine learning areas may be the same, and they may be freely set by managers.

The hands of workers in the image data processed in the example embodiment refer to the portions on the distal sides of the wrists of the workers. However, for example, if the workers are wearing gloves or if the workers are holding machine tools, jigs or writing implements of some sort within the image capture areas, then the image data may be analyzed by treating, as the "hands", images of states in which gloves are worn or states in which machine tools, jigs, writing implements or the like are being held.

The example embodiments of the present invention have been explained in detail with reference to the drawings above. However, the specific structure is not limited to the example embodiments, and design modifications and the like, within a range not departing from the spirit of the present invention, are also included.

This application is based upon and claims the benefit of priority from Japanese patent application No. 2020-025497, filed on February 18, 2020, the disclosure of which is incorporated herein in its entirety by reference.

### INDUSTRIAL APPLICABILITY

The present invention relates to a work rate measurement device and a work rate measurement method for measuring work rates when performing manual work within work frames on a production line in a factory or the like.

### Description of Reference Symbols

- 1: Model generation means
- 2: Data analysis saving means
- 3: Work rate computation means
- 10: Work rate measurement device
- 11: Activity control unit
- 11A: Model generation means
- 11B: Data analysis saving means
- 11C: Work rate computation means
- 12: Data processing unit
- 13: Image capture unit
- 14: Hub
- 20: VMS server
- 21: Recorded-image storage
- 22: Image analysis/WEB server
- 30: Production line
- 100: Work rate measurement device
- CA: Camera
- C1: Camera
- C2: Camera
- C3: Camera
- C4: Camera
- EA: Image capture area
- FL: Work frame
- N: Network

## Claims

1. A work rate measurement device for measuring a work rate when manual work is performed within a prescribed work frame provided for each of a plurality of steps, the work rate measurement device comprising:
a model generation means for capturing an image within the work frame using cameras installed for the plurality of steps, causing machine learning to be performed on a hand of a worker held within the work frame based on the captured data, and generating a machine learning model for each of the cameras;
a data analysis saving means for analyzing whether or not a position of a hand of a worker is included within the work frame with respect to an image of actual work being performed using the machine learning model generated by the model generation means and saving, in chronological order, analysis data obtained by the analysis; and
a work rate computation means for determining a work rate within each work frame using the analysis data saved by the data analysis saving means.

2. The work rate measurement device according to claim 1, wherein the model generation means causes the machine learning to be performed based on a state change in which a hand of a worker in the work frame is made to move the hand to be at least one of palm upward, palm downward or rotated, or at least one background work environment among brightness, angle of view, type, brightness and glare in vicinity of the hand in the work frame.

3. The work rate measurement device according to any either claim 1 or 2, wherein the model generation means sets a plurality of work frames for an image capture area of one camera installed at a work area for a work step.

4. The work rate measurement device according to any one of claims 1 to 3, wherein the data analysis saving means saves in a server, as analysis data for each time, together with log data, a moving image representing a positional relationship between the work frame and a hand of a worker.

5. The work rate measurement device according to any one of claims 1 to 4, wherein the work rate computation means computes a work rate in the work frame based on ON and/or OFF data indicating whether or not a hand of a worker appears within the work frame.

6. The work rate measurement device according to any one of claims 1 to 5, wherein the work rate computation means displays, in an hourly manner, a computed work rate in the work frame in graph form.

7. The work rate measurement device according to any one of claims 1 to 6, wherein the data analysis saving means analyses a stay time of an object image other than the hand of the worker.

8. A work rate measurement method for measuring a work rate when manual work is performed within a prescribed work frame provided for each of a plurality of steps, the work rate measurement method comprising:
a model generation step of capturing an image within the work frame using cameras installed for the plurality of steps, causing machine learning to be performed on a hand of a worker held within the work frame based on the captured data, and generating a machine learning model for each of the cameras;
a data analysis saving step of analyzing whether or not a position of a hand of a worker is included within the work frame with respect to an image of actual work being performed using the machine learning model generated by the model generation step and saving, in chronological order, analysis data obtained by the analysis; and
a work rate computation step of determining a work rate within each work frame using the analysis data saved by the data analysis saving step.
